# EUROPEAN PATENT APPLICATION

(11) **EP 2 113 822 A1**
(43) Date of publication of application: **04.11.2009**
(21) Application number: 09150863.0
(22) Date of filing: 19.01.2009
(51) Int. Cl.: G06F 1/32

(54) **Relay device with power saving**

(30) Priority: 30.04.2008 JP 2008118542
(71) Applicant: Fujitsu Limited, Kawasaki-shi, Kanagawa 211-8588 (JP)
(72) Inventor: Matsubara, Masakazu, Kawasaki-shi, Kanagawa 211-8588 (JP)
(74) Representative: Stebbing, Timothy Charles

(57) **Abstract**

A relay device (20) which includes: a signal relay section (21) that relays a signal communicated between a computer (11, 12, 13, 14) and at least one device (31, 32, 33, 34) that communicates with the computer and operates in accordance with an instruction from the computer; a power source section (24) that supplies electric power to the at least one device in accordance with control from an outside; a signal monitoring section (211) that monitors a signal sent to the signal relay section from the computer; and a power source control section (23) that causes the power source section to supply electric power to the at least one device when reception of a signal representing a communication request from the computer is detected by the signal monitoring section.

## Description

The present invention relates to a relay device and a relay system.

Various devices typified by storages that are externally connected to a computer are known. These devices operate in accordance with an instruction from the computer; however, many of them have their own electric power supply systems independent from the computer. When using a computer, a user of the computer not only turns on the computer but also turns on a device by, for example, operating a power switch of the device.

Among such devices, some turn on by themselves by detecting a signal transmitted from the computer. For example, a technique is known in which a computer peripheral device connected through Universal Serial Bus (USB) detects a Start of Frame (SOF) signal from a host, which is a computer, and automatically turns on by itself (for example, refer to Japanese Laid-open Patent Publications No. 2001-195158 and No. 2004-78388).

However, in a system in which at least one device is connected to a computer, all devices are not necessarily compatible with the automatic turning on of power by signal detection. Accordingly, when a device that is not compatible with the automatic power-on is connected, it is required to operate a power source switch in this device for turning on power.

It would be desirable to enable a relay device and a relay system to turn on at least one device without a switch operation.

According to an aspect of the invention, a relay device includes:
a signal relay section that relays a signal communicated between a computer and at least one device, which communicates with the computer and operates in accordance with an instruction from the computer;
a power source section that supplies electric power to the at least one device in accordance with control from an outside;
a signal monitoring section that monitors a signal sent to the signal relay section from the computer; and
a power source control section that causes the power source section to supply electric power to the at least one device when reception of a signal representing a communication request from the computer is detected by the signal monitoring section.

It is to be understood that both the foregoing general description and the following detailed description are exemplary and explanatory only and are not restrictive of the invention, as claimed.

Reference is made, by way of example only, to the accompanying drawings in which:
FIG. 1 is a block diagram illustrating a relay system as a concrete first embodiment of the relay system;
FIG. 2 is a block diagram illustrating a composition of a SAS repeater illustrated in FIG. 1;
FIG. 3 is a flowchart describing an electric power control processing of a relay device illustrated in FIG. 1; and
FIG. 4 is a diagram illustrating a concrete second embodiment of the relay system.

Concrete embodiments for the relay device and the relay system of which the basic embodiment and application embodiment are described above will be described hereinafter by referring to drawings.

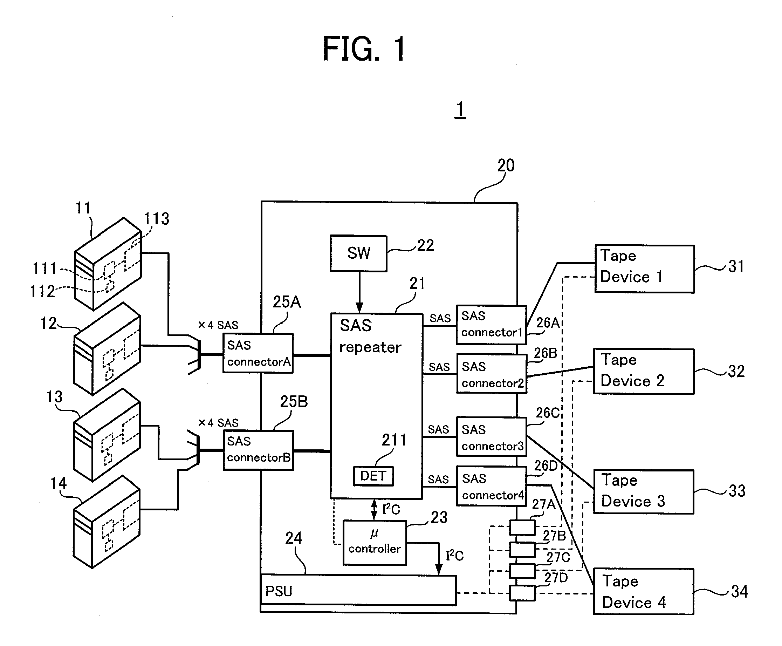

FIG. 1 is a block diagram illustrating a relay system as a concrete first embodiment of the relay system.

A relay system 1 illustrated in FIG. 1 includes: four computers 11, 12, 13, 14; four tape devices 31, 32, 33, 34 as an information storage that stores information of these computers; and a relay device 20. Here, each of the computers 11 to 14 corresponds to an example of the computer in the basic embodiment. Meanwhile, each of the tape devices 31 to 34 corresponds to an example of the device in the basic embodiment.

Each of the computers 11 to 14 is an information processing device that processes information independently from one another. The term "computer" includes any kind of information processing device including, for example, a media player or suitably-equipped television. The computers 11 to 14 have a similar composition, and a description will be given of the computer 11 as a representative. The computer 11 includes: a central processing unit (CPU) 111 that processes information; a memory section 112 that stores therein a program to be executed by the CPU 111 and information processed; and a host bus adapter (HBA) 113 that exchanges information with the outside of the computer 11. The memory section 112 is composed of a memory and a hard disk device. The host bus adapter 113 performs communications, under the control of the CPU 111, with any one of the tape devices 31 to 34. As a communication standard between the computers 11 to 14 and the tape devices 31 to 34, a serial attached SCSI (hereinafter, referred to as SAS) is employed. SAS is a next-generation standard of SCSI which has been employing parallel transmission, and communication with SAS is performed by serial transmission. Note that, according to the conventional SCSI standard, a signal line for transmitting, to the outside, a Termpower signal that indicates an on-off state of a power source of a computer is installed independently from a data signal line; however, in SAS, a signal line for transmitting a Termpower signal is not specified. The host bus adapter 113 functions as an initiator, that is, a master side, in an SAS protocol.

The tape devices 31 to 34 operate in accordance with an instruction from the computers 11 to 14. To be more specific, the tape devices 31 to 34 are responsible for backup of the memory sections included in the respective computers 11 to 14, store data received from the computers 11 to 14, and read out the stored data and transmit that to the computers 11 to 14. Although not illustrated in the drawing, each of the tape devices 31 to 34 includes: an adapter that transmits a signal to and receives a signal from the outside; a magnetic tape as an information recording medium; and a recording and reproducing section that performs recording and reproduction of information to the magnetic tape. Electric power of the tape devices 31 to 34 is supplied from the relay device 20. In FIG. 1, an electric power supply line is indicated by a broken line.

The relay device 20 is a device that relays communications between the tape devices 31 to 34 and the computers 11 to 14, and it also has a function as a selecting device that selects whether or not each of the tape devices 31 to 34 is communicably connected to any one of the computers 11 to 14. The relay device 20 includes: an SAS repeater 21 that relays a signal; a connection setting switch (SW) 22 that determines a connection in response to a selecting operation; a micro-controller (µ-controller) 23 that controls each part of the relay device 20; a power source unit (PSU) 24 that supplies electric power to the tape devices 31 to 34; computer-side SAS connectors 25A and 25B to be connected to SAS signal lines on the side of the computers 11 to 14; drive-side SAS connectors 26A, 26B, 26C, and 26D to be respectively connected to SAS signal lines on the side of the tape devices 31 to 34; and power source connectors 27A, 27B, 27C, and 27D to be connected to electric power lines of the respective tape devices 31 to 34. Here, the micro-controller 23 corresponds to an example of the power source control section in the basic embodiment.

Each of the computer-side SAS connectors 25A and 25B is connected to the four SAS signal lines collectively. Here, one SAS signal line refers to one physical link which is the smallest connection unit in the SAS standard. Accordingly, to the SAS repeater 21 in the relay device 20, up to eight computers can be connected through the two computer-side SAS connectors 25A and 25B. In the example illustrated in FIG. 1, the computer-side SAS connector 25A is connected to the two computers 11 and 12, while the computer-side SAS connector 25B is connected to the two computers 13 and 14. Note that, in a connection in accordance with the SAS standard, it is also possible to tie together four SAS signal lines stored in one computer-side SAS connector and connect them to one computer. On the other hand, each of the drive-side SAS connectors 26A to 26D is connected to one SAS signal line. To the SAS repeater 21 in the relay device 20, the four tape devices 31 to 34 are connected through the four drive-side SAS connectors 26A to 26D. In the SAS repeater 21, selection whether or not each of the tape devices 31 to 34 is communicably connected to any one of the computers 11 to 14 is determined by operation of the connection setting switch 22. Details of the SAS repeater 21 will be described below.

The power source unit 24 performs voltage conversion in response to electric power supply from the outside and supplies electric power which has been subjected to the voltage conversion to the four tape devices 31 to 34. Electric power is supplied through the power source connectors 27A to 27D. The power source unit 24 supplies electric power to the tape devices 31 to 34 in accordance with the control by the micro-controller 23. The power source unit 24 also constantly supplies electric power to the micro-controller 23 and the SAS repeater 21.

The micro-controller 23 controls the operation of the SAS repeater 21 and the power source unit 24 by executing a built-in program. In the example in FIG. 1, the micro-controller 23 is connected to the SAS repeater 21 and the power source unit 24 by an I²C bus signal line. The micro-controller 23 reads out a value of a register installed in the SAS repeater 21 so as to obtain a signal status in the SAS repeater 21. Furthermore, the micro-controller 23 also includes a timer, which is not illustrated in the drawing, for timing of a certain time period.

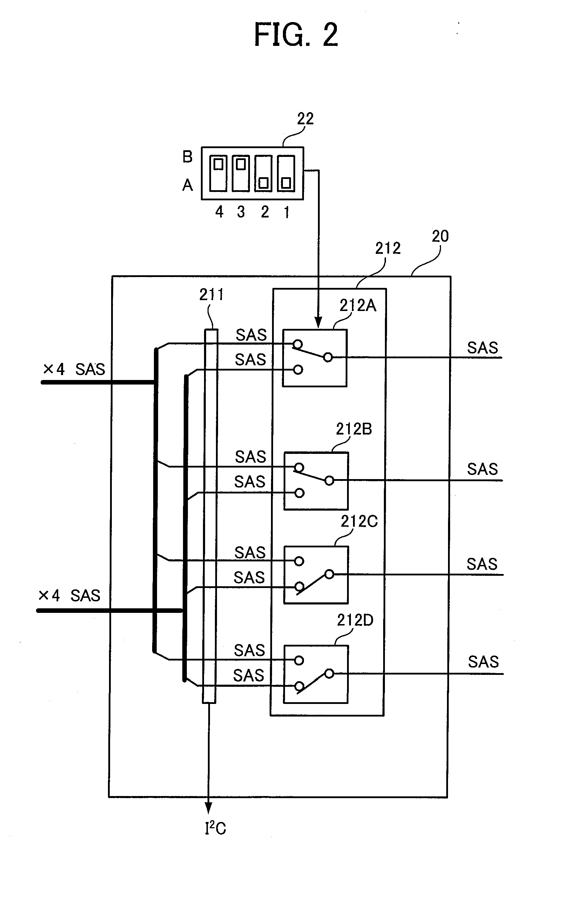

FIG. 2 is a block diagram illustrating the composition of the SAS repeater 21 illustrated in FIG. 1. In FIG. 2, the connection setting switch 22 is also illustrated.

The SAS repeater 21 includes: a signal relay section 212 that relays a signal through a set path; and a signal monitoring section (DET) 211 that monitors a signal sent from the computers 11 to 14 (refer to FIG. 1). The signal relay section 212 includes four switches 212A, 212B, 212C, and 212D. Here, the signal relay section 212 corresponds to an example of the signal relay section in the basic embodiment, and the signal monitoring section 211 corresponds to an example of the signal monitoring section in the basic embodiment.

The four SAS signal lines led through the computer-side SAS connector 25A (refer to FIG. 1) are respectively connected to the four switches 212A to 212D at one end side thereof. Meanwhile, the four SAS signal lines led through the computer-side SAS signal connector 25B (refer to FIG. 1) are respectively connected to the four switches 212A to 212D at the other end side thereof. Furthermore, the four SAS signal lines led through the four drive-side SAS connectors 26A to 26D are connected to the four switches 212A to 212D at a switching end side thereof. It is determined, by a respective bit setting in the connection setting switch 22, which side of the two computer-side SAS connectors 25A and 25B is selected by each of the four switches 212A to 212D. In the setting example of the connection setting switch 22 illustrated in FIG. 2, each of the switches 212A to 212D is selected as illustrated in the drawing. Consequently, in FIG. 1, the signal relay section 212 relays a signal between the computer 11 and the tape device 31, relays a signal between the computer 12 and the tape device 32, relays a signal between the computer 13 and the tape device 33, and relays a signal between the computer 14 and the tape device 34. Here, the signals are relayed bi-directionally.

The signal monitoring section 211 monitors a signal sent from the computers 11 to 14 (refer to FIG. 1) to the signal relay section 212. To be more specific, the signal monitoring section 211 monitors a signal representing a communication request from any one of the computers 11 to 14. In an example in accordance with the SAS standard, an out-of-band signal is detected as a signal representing a communication request. Here, it is monitored, in addition to a signal representing a communication request, whether or not there is a signal from the computers 11 to 14. The signal monitoring section 211 includes a register, and the monitoring result is presented as a register value. The micro-controller 23 reads out the register value so as to obtain a signal reception status and a reception status of a signal representing a communication request. Further, the signal monitoring section 211 sets, in response to a part of a signal, for example, an out-of-band signal, sent from the computers 11 to 14 (refer to FIG. 1), a data transfer rate and a communication format of the signal monitoring relay section 212, and then sends a response signal to the computers 11 to 14. Consequently, communications is performed between the computers 11 to 14 and the SAS repeater 21, and then a link is established.

Description will be continued by referring back to FIG. 1. In the case where reception of an out-of-band signal representing a communication request from the computer is detected by the signal monitoring section 211 when the micro-controller 23 periodically reads out a value from the register in the signal monitoring section 211, the micro-controller 23 controls the power source unit 24 so as to cause it to supply electric power to the tape devices 31 to 34. Meanwhile, in the case where no signal from any one of the computers is detected by the signal monitoring section 211 for a certain period of time, the micro-controller 23 controls the power source unit 24 so as to cause it to stop electric power supply to the tape devices 31 to 34.

Hereinafter, an electric power control processing in the relay device 20 will be described.

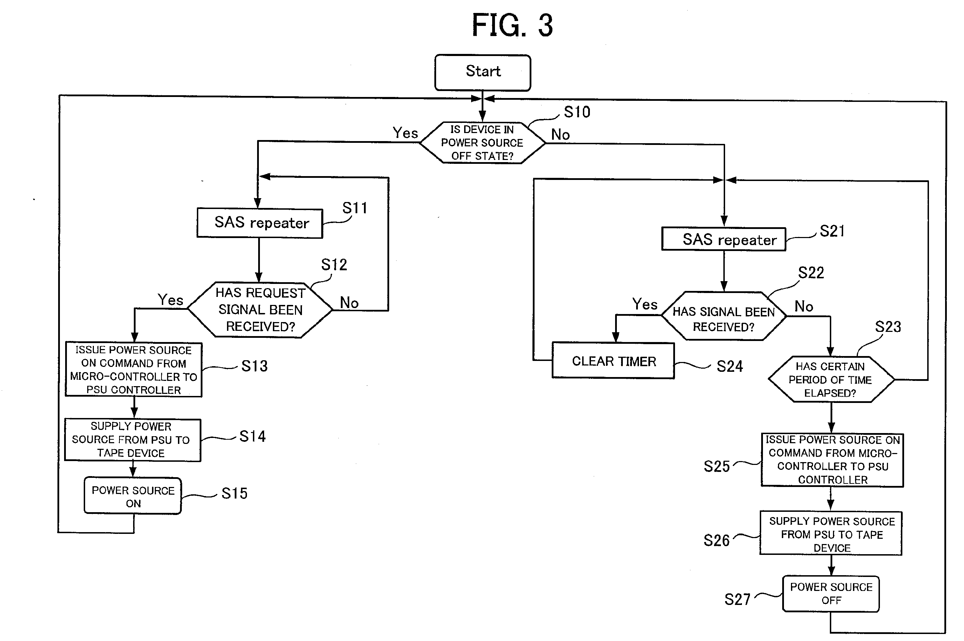

FIG. 3 is a flowchart describing an electric power control processing in the relay device 20 illustrated in FIG. 1.

The electric power control processing is achieved mainly by: the micro-controller (abbreviated as mi-con) 23 that executes the built-in program; the SAS repeater 21; and the power source unit 24.

Firstly, the mi-con 23 judges whether or not the power source unit 24 is in an electric power supply shutoff (OFF) state (step S10). In the case where the power source unit 24 is in an electric power supply shutoff (OFF) state (Y in step S10), the mi-con 23 reads out the register included in the signal monitoring section 211 in the SAS repeater 21 (step S11), and judges whether or not a signal representing a communication request has been received by the signal monitoring section 211 (step S12). Here, in the case where the signal monitoring section 211 has not received a signal representing a communication request (N in step S12), the processes in steps S11 and S12 are repeated. When the signal monitoring section 211 receives a signal representing a communication request, the mi-con 23 sets a data transfer rate and a communication format of the signal relay section 212 and transmits a response signal while changing the register value to that representing signal reception. In this case (Y in step S12), the mi-con 23 issues a power source On command to the power source unit 24 so as to cause it to supply electric power (step S13). Consequently, electric power is supplied to the tape devices 31 to 34 from the power source unit 24 (step S14), and the tape devices 31 to 34 are in a power source ON state (step S15). As described above, electric power is supplied to the four tape devices 31 to 34 when a signal representing a communication request is sent from any one of the computers 11 to 14. Accordingly, even if the tape devices 31 to 34 are not compatible with automatic turning on of a power source, it is possible to turn on all of the tape devices 31 to 34 without an operation on the tape devices 31 to 34.

In step S10, in the case where the power source unit 24 is in an electric power supply (ON) state (N in step S10), the mi-con 23 reads out the register included in the signal monitoring section 211 in the SAS repeater 21 (step S21), and judges whether or not the signal monitoring section 211 has received any signal (step S22). In the case of judging no signal has been received (N in step S22), the mi-con 23 judges whether or not a certain period of time has elapsed by reading out a value of the internal timer for timing (step S23). The certain period of time here is a time period in which the possibility of signal transmission and reception is lowered, and is 10 minutes, for example. In the case where the certain period of time has not elapsed, the processes in steps S21 and S22 are repeated. During the repeat, when it is judged that any signal has been received in step S22, the mi-con 23 clears the internal timer and start timing of a certain period of time again from the beginning.

In the case where it is judged that a certain period of time has elapsed in step S23 (Y in step S23), the mi-con 23 issues a power source Off command to the power source unit 24 so as to cause it to stop electric power supply (step S25). Consequently, in the case where no signal from the computer is detected for a certain period of time, electric power supply from the power source unit 24 to the tape devices 31 to 34 is stopped (step S26), and the tape devices 31 to 34 are in a power source OFF state (step S27). As described above, power source shutoff in the four tape devices 31 to 34 is also carried out without a switch operation on the tape devices 31 to 34.

Next, a concrete second embodiment of a relay device and a relay system will be described. In the following description of the second embodiment, elements which are the same as those in the first embodiment having been described will be indicated by the same reference numerals, and a difference from the first embodiment will be described.

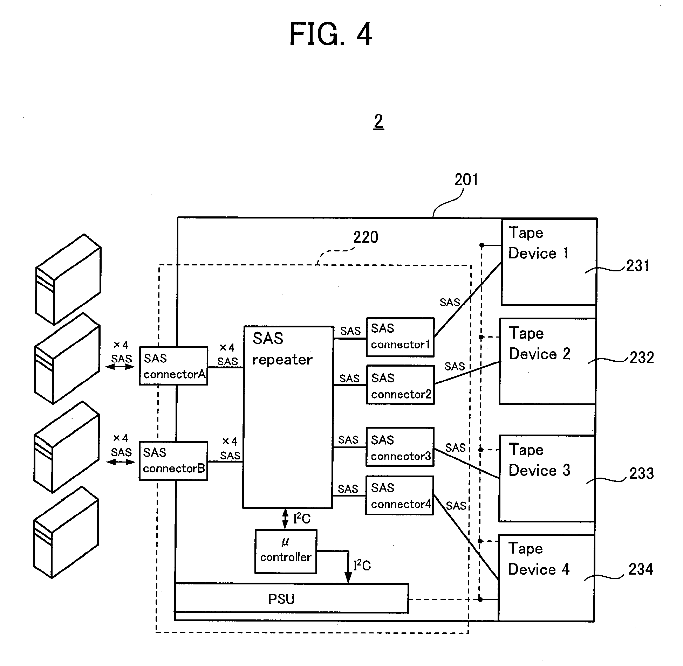

FIG. 4 is a diagram illustrating the concrete second embodiment of the relay system.

A relay system 2 illustrated in FIG. 4 has both a relay device 220 and tape devices 231 to 234 housed in a housing 201, and functions as a single tape device array in which multiple media can be mounted.

Note that, in the descriptions of the respective concrete embodiments, a tape device is presented as an example of a device in the basic embodiment described above; however, the device may be, instead of a tape device, an information storage represented by, for example, a hard disk drive and an optical disk drive, or may be an information processing device represented by a scanner.

Furthermore, in the descriptions of the respective concrete embodiments, four computers are presented as an example of a computer in the basic embodiment described above; however, there may be one computer or multiple computers other than four. Furthermore, the four tape devices 31 to 34 are presented as the at least one device in the basic embodiment; however, there may be one, two, three, or at least five devices.

According to the basic embodiment, since electric power is supplied to the at least one device by transmission of a signal representing a communication request from the computer, the at least one device can be turned on without a switch operation even if any one of the at least one device or all of them are not compatible with the automatic turning on of power.

As has been described above, according to the basic embodiment of the relay device and the relay system, even if any of the devices or all of the devices are not compatible with automatic turning on of a power source, it is possible to turn on the at least one device without a switching operation.

According to the preferable application embodiment, the power source in the at least one device can also be shut off without a switch operation.

Note that, as for the relay system described in the basic embodiment above, only the basic embodiment will be described herein. This is simply for avoiding duplication. Therefore, in the relay system in the present invention, not only the basic embodiment described above but also various application embodiments corresponding to the respective application embodiments of the relay device described above are included.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment of the present invention have been described in detail, it should be understood that the various changes, substitutions, and alterations could be made hereto without departing from the scope of the claims.

## Claims

1. A relay device, comprising:
a signal relay section that relays a signal communicated between a computer and at least one device which communicates with the computer and operates in accordance with an instruction from the computer;
a power source section that supplies electric power to the at least one device in accordance with control from outside;
a signal monitoring section that monitors a signal sent to the signal relay section from the computer; and
a power source control section that causes the power source section to supply electric power to the at least one device when reception of a signal representing a communication request from the computer is detected by the signal monitoring section.

2. The relay device according to claim 1, wherein the power source control section causes the power source section to stop electric power supply to the at least one device when no signal from the computer is detected by the signal monitoring section for a certain period of time.

3. A relay system, comprising:
a computer;
at least one device that communicates with the computer and operates in accordance with an instruction from the computer; and
a relay device that relays communications between the computer and the at least one device, wherein
the relay device comprises:
a signal relay section that relays a signal communicated between the at least one device and the computer;
a power source section that supplies electric power to the at least one device in accordance with control from an outside;
a signal monitoring section that monitors a signal sent to the signal relay section from the computer; and
a power source control section that causes the power source section to supply electric power to the at least one device when reception of a signal representing a communication request from the computer is detected by the signal monitoring section.

4. The relay system according to claim 3, wherein the power source control section causes the power source section to stop electric power supply to the at least one device when no signal from the computer is detected by the signal monitoring section for a certain period of time.
